# FASCICULE DE BREVET EUROPEEN

(11) **EP 3 208 809 B1**
(45) Date de publication et mention de la délivrance du brevet: **13.06.2018**
(21) Numéro de dépôt: 17156222.6
(22) Date de dépôt: 15.02.2017
(51) Int. Cl.: G21F 7/005, A61J 1/00, B01L 1/00, B25J 1/00, F16L 55/00, G01N 1/22, G21F 7/047, B01L 3/00, B25J 21/02, E05B 65/00

(54) **SYSTÈME DE CONNEXION**
VERBINDUNGSSYSTEM
CONNECTION SYSTEM

(30) Priorité: 18.02.2016 BE 201605117
(43) Date de publication de la demande: 23.08.2017
(73) Titulaire: Aseptic Technologies S.A., 5032 Les Isnes (BE)
(72) Inventeur: BALERIAUX, Patrick, 6120 Nalinnes (BE); AELGOET, Eric, 1400 Nivelles (BE)
(74) Mandataire: Gevers Patents

(56) Documents cités:
- EP-A1- 1 312 096
- WO-A1-2014/099811
- DE-B3-102009 018 566

## Description

La présente invention se rapporte à un système de connexion pour connecter un environnement intérieur d'un compartiment à un environnement extérieur audit compartiment, ledit compartiment étant isolé par rapport audit environnement extérieur et ledit système de connexion comprenant :
- une paroi de connexion pour séparer ledit environnement intérieur dudit environnement extérieur, ladite paroi de connexion présentant un orifice de communication agencé pour recevoir un élément de connexion traversant présentant un corps principal sur lequel est monté un étui de façon amovible, et
- un dispositif de fermeture amovible interne audit compartiment agencé pour sceller de façon étanche ledit orifice de communication dudit compartiment, agencé pour pouvoir être accouplé de façon séparable avec ledit étui monté sur ledit corps principal dudit élément de connexion et agencé de telle sorte que, lors de son enlèvement à l'intérieur dudit compartiment, il permet un enlèvement simultané dudit étui en le désolidarisant dudit corps principal dudit élément de connexion.

Par les termes « compartiment étant isolé » ou « compartiment isolé », on entend, au sens de la présente invention, que le compartiment est isolé de façon étanche ou quasi-étanche pour prévenir toute contamination liée à la présence de germes, de bactéries, de particules chimiques, de particules inertes ou encore de tout autre contaminant. Cette isolation permet d'éviter les contaminations entre des environnements présentant des conditions environnementales différentes, plus particulièrement entre l'environnement intérieur du compartiment et l'environnement extérieur du compartiment, les contaminants pouvant se trouver soit dans l'environnement intérieur du compartiment, soit dans l'environnement extérieur du compartiment.

A titre d'exemple, dans l'industrie, pharmaceutique, il existe différents types d'environnement qui sont classifiés en grade A, B, C , D, ..., le grade A correspondant classiquement au grade de classification environnementale le plus propre. Au plus le grade est propre, au plus sévères sont les normes qui régissent la tolérance vis-à-vis de la présence de contaminants, comme les microorganismes, les particules fines et les poussières. Classiquement, les salles propres en environnement GMP (Good Manufacturing Process) sont des salles aseptiques qui présentent des zones A, B, C et D au travers desquelles transitent les différentes substances destinées à devenir des produits pharmaceutiques. Dans ce contexte, le grade A correspond à l'environnement final dans lequel les produits pharmaceutiques injectables sont répartis dans des conteneurs finaux, typiquement dans des tubes, des ampoules ou des flacons après passage au travers d'aiguilles de remplissage. Ces tubes, ampoules ou flacons sont bien entendu préalablement stérilisés et traités de manière à minimiser leur contenu particulaire. Ils sont également inertes vis-à-vis du produit pharmaceutique qu'ils contiennent en ce qu'ils ne relarguent pas ou très peu de particules ou de composés chimiques dans la solution. De manière générale, ces contenants doivent répondre à des normes strictes très sévères pour garantir la sécurité des patients.

En conséquence, durant le procédé de production, le milieu contenant la substance destinée à devenir un produit pharmaceutique subit différentes étapes comme des purifications, des filtrations ou d'autres transformations, ce qui implique que la substance transite d'une zone d'un grade particulier vers une zone de grade plus élevé ou d'un contenant à un autre. Ces contenants ou zones présentent un environnement extérieur et un environnement intérieur, l'environnement extérieur étant par essence moins propre que l'environnement intérieur ou du moins susceptible d'être moins propre. Ainsi, une poche contenant une substance destinée à être répartie en grade A ne peut pas elle-même se trouver en grade A si elle a été préalablement exposée à un environnement de grade inférieur puisque l'extérieur de la poche est susceptible d'être contaminé et donc de contaminer l'environnement intérieur de la zone de grade A et, par conséquent, le produit pharmaceutique lui-même.

A l'inverse, certains produits pharmaceutiques particulièrement actifs tels que les produits anti-cancéreux par exemple, ou certains produits issus de la biotechnologie faisant usage de vecteurs viraux vivants, nécessitent de confiner les opérations de répartition dans une enceinte close afin de minimiser le risque de contamination de l'espace environnant, c'est-à-dire du milieu extérieur au compartiment.

De nos jours, diverses solutions de transfert entre zones de différents grades ou de différents niveaux de contamination ont été développées, lesquelles ont toutes pour but de réduire le risque de contamination d'une zone par l'état environnemental d'une autre zone. A titre d'exemple, pour le remplissage aseptique de tubes, de flacons et d'ampoules par les produits pharmaceutiques, il existe des « boites à gants » de grade A qui contiennent les tubes, les flacons ou les ampoules ainsi que des aiguilles de remplissage. Ces « boites à gants » comprennent également un orifice de communication au travers duquel le contenu d'un réservoir situé dans un environnement extérieur (potentiellement de grade moins propre) est transféré. Cet orifice de communication est équipé de dispositifs permettant de réduire au maximum le risque de contamination en utilisant des éléments de connexion qui coopèrent de manière étanche avec l'orifice de communication, sans risquer de mettre le produit pharmaceutique à transférer en contact avec des surfaces qui auraient pu être contaminées par exposition à un environnement de grade inférieur.

En ce sens, un système de connexion tel qu'indiqué au début est connu des documents DE 10 2009 018 566 et EP1312096 Plus particulièrement, ce système de connexion est décrit comme assurant aseptiquement le transfert d'un fluide au départ d'un contenant situé dans un environnement d'un grade donné vers des contenants de plus petit volume présents dans un environnement de grade plus élevé, le contenu des contenants devant être parfaitement stérile. De tels transferts sont critiques notamment dans les industries pharmaceutiques où il est impératif que le conditionnement de volumes importants de solutions stock en de plus petits volumes soit effectué sans risquer de contaminer la solution à répartir. A cette fin, les contenants de plus petit volume sont remplis dans un compartiment isolé aseptiquement par rapport à l'environnement extérieur, le fluide étant pompé par exemple au départ d'une poche, passant au travers de la tubulure de l'élément de connexion puis étant distribué dans les contenants de plus petit volume qui sont remplis à l'aide d'un dispositif de remplissage aseptique.

Lors de ces opérations, l'élément de connexion, relié à l'une de ses extrémités au contenant de la solution stock et à son autre extrémité (située à l'intérieur du compartiment stérile) à un dispositif de remplissage aseptique de fluide, joue un rôle clé en ce qu'il constitue l'interface permettant le transfert aseptique du fluide entre le milieu environnant extérieur (typiquement moins propre, mais pas forcément) et l'environnement intérieur du compartiment. Pour assurer un isolement parfait entre l'environnement intérieur du compartiment et l'environnement extérieur du compartiment, des moyens de blocage sont prévus de telle façon à former une connexion étanche entre l'élément de connexion et la paroi de connexion, ceci pour empêcher toute entrée de contaminants dans le compartiment. Cette connexion étanche est assurée par une mise en contact, via les éléments de blocage susmentionnés, de la paroi rigide du compartiment avec l'élément de connexion qui est également rigide, un joint d'étanchéité souple pouvant être présent entre ces deux éléments rigides afin de renforcer le caractère étanche de la connexion.

En outre, le document antérieur EP1312096 décrit un étui amovible qui entoure la partie de l'élément de connexion qui entre dans le compartiment. Un dispositif de fermeture amovible interne au compartiment est également prévu et coopère avec ledit étui. L'étui et le dispositif de fermeture amovible sont agencés l'un par rapport à l'autre de telle sorte qu'aucun contaminant ne peut compromettre la stérilité du compartiment où ont lieu les remplissages des contenants de petit volume. En effet, le dispositif de fermeture amovible confine les éventuels contaminants présents sur l'étui entre sa paroi interne et la paroi externe de l'étui. Lorsque le dispositif de fermeture amovible est retiré, il est prévu pour entraîner le retrait simultané de l'étui sans qu'aucun contaminant ne puisse gagner l'environnement intérieur du compartiment dès lors que les contaminants sont confinés entre la paroi externe de l'étui et la paroi interne du dispositif de fermeture amovible.

Avec un tel système de connexion, l'interface entre l'environnement extérieur et l'environnement intérieur de grade plus élevé du compartiment est donc constituée d'une part par la paroi de connexion et, d'autre part, par l'élément de connexion traversant qui comble de façon étanche l'orifice de communication de cette paroi de connexion. Il est donc essentiel que l'élément de connexion soit maintenu de façon étanche au niveau de l'orifice de communication faute de quoi, en cas de chute ou de désengagement de l'orifice de communication de cet élément de connexion, des contaminants extérieurs pourraient contaminer l'environnement interne du compartiment ou, au contraire, des contaminants initialement présents dans le compartiment pourraient gagner le milieu environnant. Dans un tel cas de figure, tout le dispositif devrait être décontaminé à nouveau, ce qui impose un arrêt de la chaîne de production en plus d'une perte du lot en cours d'utilisation lors de la chute ou du désengagement de l'élément de connexion.

Actuellement, comme indiqué plus haut, afin de sécuriser le positionnement de l'élément de connexion au niveau de l'orifice de communication du compartiment, il est prévu, comme par exemple dans le documents EP1312096, des éléments de blocage de cet élément de connexion au niveau de la paroi de connexion du côté environnement extérieur. Par ailleurs, lorsque l'élément de connexion, dont le corps principal est entouré par un étui amovible, est engagé, via l'orifice de communication, dans le dispositif de fermeture amovible interne, l'étui amovible est en outre retenu par ce dernier. Par conséquent, avant que le dispositif de fermeture amovible ne soit retiré pour enlever l'étui monté sur le corps principal dudit élément de connexion, ce dernier est maintenu contre la paroi de connexion du système de connexion d'une part par les éléments de blocage au niveau de la paroi de connexion et, d'autre part, par le dispositif de fermeture amovible. Dans ce cas de figure, le système de connexion ne présente aucun risque de désengagement de l'élément de connexion au départ de l'orifice de communication de la paroi de connexion.

Par contre, malheureusement, même si l'élément de connexion est sécurisé par les éléments de blocage suite à son insertion dans l'orifice de communication et dans le dispositif de fermeture amovible interne au compartiment, dès que ce dispositif de fermeture amovible interne est retiré pour enlever l'étui monté sur le corps principal dudit élément de connexion, seuls les éléments de blocage au niveau de la paroi de connexion permettent d'assurer un maintien du positionnement étanche de l'élément de connexion contre la paroi de connexion du compartiment. Or, si, par inadvertance ou suite à une erreur de manipulation, un opérateur désactive le blocage assuré par les éléments de blocage au niveau de la paroi de connexion lorsque le dispositif de fermeture amovible n'est plus présent, le risque est grand que l'élément de connexion se désengage de l'orifice de communication et permette ainsi à des contaminants de gagner l'environnement interne du compartiment ou, à l'inverse, que des particules (par exemple des particules toxiques) initialement contenues dans le compartiment gagnent l'environnement extérieur au compartiment. En d'autres termes, il existe donc un risque qu'en l'absence du dispositif de fermeture amovible interne, l'élément de connexion puisse être retiré, auquel cas des contaminations entre environnements distincts pourraient avoir lieu.

Une autre problématique observée avec les systèmes de connexion actuels, comme par exemple avec un système tel que décrit dans le document EP1312096, est que rien n'empêche un retrait du dispositif amovible interne même si aucun élément de connexion n'est présent au niveau de l'orifice de communication, ou si ledit élément de connexion est présent mais n'est pas sécurisé par les éléments de blocage au niveau de la paroi de connexion. Dans ce cas, un retrait du dispositif de fermeture amovible interne au compartiment par inadvertance donnerait directement lieu à une configuration selon laquelle l'orifice de communication constituerait un passage d'air direct entre l'environnement extérieur et l'environnement intérieur du compartiment. Il est évident que ceci est tout à fait intolérable et contraire au principe même d'un système de connexion qui se doit d'assurer une séparation entre deux environnement de grades différents. En d'autres termes, il existe donc un risque qu'en l'absence d'un élément de connexion sécurisé, le dispositif de fermeture amovible interne puisse être retiré, auquel cas des contaminations entre environnements distincts pourraient également avoir lieu.

A ce jour, il existe donc un réel besoin de procurer un système de connexion permettant de contrer toute erreur de manipulation. En particulier, d'une part, il existe un réel besoin de procurer un système de connexion dont le dispositif de fermeture amovible interne ne peut pas être retiré tant que l'élément de connexion n'est pas sécurisé au niveau de la paroi de connexion du côté de l'environnement extérieur. D'autre part, en parallèle, il existe un réel besoin de procurer un système de connexion pour lequel l'élément de connexion ne peut pas être retiré lorsque le dispositif de fermeture amovible interne ne scelle pas façon étanche l'orifice de communication du compartiment du côté environnement intérieur du compartiment.

En d'autres termes, il existe donc un réel besoin de procurer un système de connexion permettant de contrer toute erreur de manipulation pouvant se produire après introduction de l'élément de connexion, cette erreur de manipulation pouvant être opérée tant au niveau de la paroi de connexion du côté de l'environnement extérieur (par exemple en permutant par inadvertance la position des éléments de blocage) qu'au niveau du dispositif de fermeture amovible interne au compartiment (par exemple en désengageant par inadvertance le dispositif de fermeture amovible au mauvais moment), ceci afin d'éviter toute contamination entre deux environnements distincts. Plus particulièrement, comme indiqué plus haut, il convient de procurer un système de connexion assurant en permanence, suite à la sécurisation de l'élément de connexion, une étanchéité entre deux environnements distincts, quelle que soit la configuration du système de connexion, c'est-à-dire que le dispositif de fermeture amovible soit présent ou non au niveau de la paroi de connexion du côté environnement intérieur.

Pour résoudre ce problème, il est prévu suivant l'invention, un système de connexion tel qu'indiqué au début, caractérisé en ce qu'il comprend en outre un dispositif de blocage, ledit dispositif de blocage comprenant, au niveau de ladite paroi de connexion côté environnement extérieur, un élément de commande d'un mécanisme de blocage, ledit élément de commande présentant
- une première position d'ouverture pour permettre une insertion dudit élément de connexion dans ledit orifice de communication et dans ledit dispositif de fermeture amovible interne et pour commander ledit mécanisme de blocage pour qu'il bloque tout mouvement dudit dispositif de fermeture amovible interne, et
- une deuxième position de fermeture pour bloquer ledit élément de connexion reçu dans ledit orifice de communication au niveau de ladite paroi de connexion côté extérieur et pour permettre audit mécanisme de blocage d'autoriser un mouvement dudit dispositif de fermeture amovible interne,
ledit mécanisme de blocage étant agencé pour
- effectuer un blocage dudit élément de commande en position de fermeture dès une initiation d'un mouvement d'enlèvement dudit dispositif de fermeture amovible interne, et
- maintenir, lors d'une poursuite dudit mouvement d'enlèvement dudit dispositif de fermeture amovible interne et jusqu'à et y compris son enlèvement complet, ledit blocage dudit élément de commande en position de fermeture.

Dans le cadre de la présente invention, il a été mis en évidence qu'un tel système de connexion permet d'assurer en permanence, suite à la sécurisation de l'élément de connexion au niveau de la paroi de connexion du côté de l'environnement extérieur au compartiment, une étanchéité entre deux environnements distincts, quelle que soit la configuration du système de connexion, c'est-à-dire que le dispositif de fermeture amovible soit présent ou non au niveau de la paroi de connexion. En d'autres termes, le système de connexion suivant l'invention permet, une fois l'élément de connexion sécurisé au niveau de la paroi de connexion du côté environnement extérieur au compartiment, d'éviter tout retrait (toute libération) de l'élément de connexion tant que le dispositif de fermeture amovible n'est pas en place, c'est-à-dire placé de façon étanche contre la paroi connexion à l'intérieur du compartiment.

En effet, dès qu'un mouvement d'enlèvement dudit dispositif de fermeture amovible interne est initié, un blocage de l'élément de commande assurant la sécurisation de l'élément de connexion au niveau de la paroi de connexion du coté environnement extérieur est opéré par le mécanisme de blocage. Par conséquent, puisque l'élément de commande est bloqué, il n'est pas possible de le faire passer de sa position de fermeture à sa position d'ouverture et il est donc tout simplement impossible, par exemple par inadvertance, de libérer l'élément de connexion. Donc, dès que le système de connexion pourrait présenter un risque de transfert de contamination entre les environnements intérieurs et extérieurs du compartiment, ceci par enlèvement du dispositif de fermeture amovible interne, il est prévu, selon l'invention, que l'élément de connexion soit totalement sécurisé en ne permettant pas à l'élément de commande de quitter sa position de fermeture de telle sorte que l'étanchéité du système est toujours assurée par l'élément de connexion bloqué de façon étanche par l'élément de commande au niveau de la paroi de connexion du côté environnement extérieur.

Par ailleurs, lorsque le mouvement d'enlèvement dudit dispositif de fermeture amovible interne est poursuivi et que le blocage initial assuré par le mécanisme de blocage n'est plus à même d'assurer sa fonction de blocage de l'élément de commande, l'élément de commande continue malgré tout à être maintenu et bloqué dans sa position de fermeture par ce même mécanisme de blocage selon un blocage secondaire. Par exemple, l'élément de commande coopère avec le mécanisme de blocage ou se positionne par rapport à ce dernier de telle façon à en empêcher tout mouvement pour assurer le maintien de l'élément de commande dans sa position de fermeture.

Par conséquent, dès le moment où le dispositif de fermeture amovible interne n'est plus à même d'assurer l'étanchéité du système de connexion, c'est-à-dire dès le moment où il est procédé à l'initiation de son retrait afin d'entraîner un enlèvement de l'étui amovible de l'élément de connexion, le système de connexion suivant l'invention permet de garantir l'étanchéité du système en empêchant tout désengagement et/ou retrait de l'élément de connexion qui ne constitue plus alors que le seul élément pouvant assurer une séparation étanche entre les deux environnements. Comme indiqué plus haut, cette garantie d'étanchéité du système lorsque le dispositif de fermeture amovible interne est enlevé est assurée par un blocage de l'élément de commande dans sa position de fermeture, laquelle position de fermeture assure elle-même un blocage de l'élément de connexion.

Selon un mode de réalisation suivant l'invention, ledit mécanisme de blocage dudit dispositif de blocage comprend
- un premier élément de blocage agencé pour effectuer un premier blocage dudit élément de commande en position de fermeture dès une initiation d'un mouvement d'enlèvement dudit dispositif de fermeture amovible interne, et
- un deuxième élément de blocage agencé pour maintenir, lors d'une poursuite dudit mouvement d'enlèvement dudit dispositif de fermeture amovible interne et jusqu'à et y compris son enlèvement complet, ledit blocage dudit élément de commande en position de fermeture.

Ce mode de réalisation selon l'invention est plus particulièrement explicité et illustré ci-après à l'appui des figures mais ne constitue pas un mode de réalisation limitatif de la présente invention, tout autre mécanisme de blocage adéquat étant couvert par la présente invention.

Selon ce mode de réalisation où sont présents un premier et un deuxième éléments de blocage, il peut être considéré qu'a lieu un premier blocage de l'élément de commande suivi par un deuxième blocage subséquent de ce même élément de commande lorsque le premier blocage n'est plus en mesure d'assurer sa fonction de blocage. Plus particulièrement, le deuxième blocage subséquent succède au premier blocage avant que ce premier blocage ne soit plus effectif. En d'autres termes, le deuxième blocage prend directement le relais du premier blocage avant même que ce dernier ne soit plus en mesure d'assurer sa fonction de blocage, et maintient la fonction de blocage de l'élément de commande même lorsque le dispositif de fermeture amovible interne est complètement désolidarisé de la paroi de connexion du côté interne du compartiment.

De préférence, le système de connexion selon l'invention comprend en outre un dispositif de blocage additionnel agencé pour, dans une première position de repos, assurer un blocage additionnel dudit dispositif de fermeture amovible interne et empêcher une introduction dudit élément de connexion dans ledit orifice de communication et pour, dans une deuxième position, être repoussé pour permettre une introduction dudit élément de connexion dans ledit orifice de communication et débloquer ledit blocage additionnel dudit dispositif de fermeture amovible interne. Dans ce cas de figure, un blocage du dispositif de fermeture amovible interne est toujours assuré, même lorsque l'élément de de commande pourrait être permuté de sa position ouverte vers sa position fermée suite à une erreur de manipulation. Il s'agit donc d'une sécurisation additionnelle du système de connexion selon l'invention, cette sécurisation étant obtenue par le dispositif de blocage additionnel qui détecte la présence de l'élément de connexion et n'autorise un mouvement du dispositif de fermeture amovible interne que lorsque cet élément de connexion est en place (« dispositif présence-élément de connexion »).

De préférence, selon l'invention, ledit élément de commande est un élément de commande mécanique se présentant sous la forme d'un bouton de commande, éventuellement sous la forme d'un bouton de commande rotatif

Avantageusement, selon l'invention, ledit premier élément de blocage comprend un logement agencé pour accueillir une came, laquelle est agencée pour être actionnée par ledit élément de commande de telle sorte à imposer un mouvement de translation audit premier élément de blocage. En d'autres termes, un passage de l'élément de commande depuis sa position d'ouverture dans sa position de fermeture va entrainer une came qui, par déplacement dans son logement, va induire un mouvement de translation du premier élément de blocage.

Préférentiellement, selon l'invention, ledit premier élément de blocage comprend en outre un élément pivotant présentant une extrémité libre et tournant autour d'un axe, ledit élément pivotant étant agencé pour effectuer un mouvement de rotation lors d'un mouvement de translation dudit premier élément de blocage.

De préférence, selon l'invention, ledit deuxième élément de blocage comprend un ressort agencé pour lui imposer un mouvement de rappel.

Préférentiellement, selon l'invention, ledit deuxième élément de blocage présente une partie pleine et une partie évidée.

Avantageusement, selon l'invention, ledit deuxième élément de blocage présente une extrémité libre munie d'une roulette.

D'autres formes de réalisation du système de connexion suivant l'invention sont indiquées dans les revendications annexées.

L'invention a aussi pour objet un dispositif de fermeture amovible interne d'un système de connexion selon l'invention, ledit dispositif de fermeture amovible interne comprenant
- une partie de tête présentant un orifice traversant central, et
- une tubulure s'étendant depuis ladite partie de tête en prolongement dudit orifice traversant central,
ladite partie de tête comprenant sur son pourtour
- une saillie située à un premier niveau,
- une rampe en prolongement de ladite saillie, ladite rampe étant située à un deuxième niveau inférieur audit premier niveau, et
- une encoche agencée pour donner accès à une rainure, ladite rainure étant située à un niveau inférieur audit deuxième niveau.

Comme il est expliqué ci-après à l'appui des figures, ces différents éléments du dispositif de fermeture amovible interne coopèrent avec les éléments du dispositif de blocage du système de connexion selon l'invention, ceci en particulier lorsqu'est opéré un mouvement (par exemple de rotation) du dispositif de fermeture amovible interne en vue de son retrait à l'intérieur du compartiment ou en vue de son repositionnement au niveau de la paroi de connexion à l'intérieur du compartiment.

D'autres formes de réalisation du dispositif de fermeture amovible suivant l'invention sont indiquées dans les revendications annexées.

L'invention a aussi pour objet un procédé de connexion d'un environnement intérieur d'un compartiment à un environnement extérieur audit compartiment, ledit procédé comprenant, les étapes de
- une introduction, via un orifice de communication d'une paroi de connexion séparant ledit environnement intérieur dudit environnement extérieur, d'un élément de connexion présentant un corps principal pour permettre son engagement dans un dispositif de fermeture amovible interne préalablement positionné et bloqué de telle sorte à sceller de façon étanche ledit orifice de communication,
- un actionnement d'un élément de commande situé du côté environnement extérieur pour le positionner dans une position de fermeture afin de sécuriser et de bloquer ledit élément de connexion contre ladite paroi de connexion au niveau dudit orifice de communication et afin de débloquer ledit dispositif de fermeture amovible interne et d'en autoriser un mouvement d'enlèvement,
- une mise en mouvement dudit dispositif de fermeture amovible interne pour permettre son enlèvement à l'intérieur dudit compartiment de façon simultanée avec un enlèvement d'un étui protégeant ledit corps principal dudit élément de connexion, ladite étape de mise en mouvement dudit dispositif de fermeture amovible interne donnant lieu
   - à un blocage dudit élément de commande dans sa position de fermeture par l'intermédiaire d'un mécanisme de blocage dès que ledit dispositif de fermeture amovible interne entame un mouvement d'enlèvement, et
   - à un maintien dudit blocage dudit élément de commande en position de fermeture par l'intermédiaire dudit mécanisme de blocage lorsque ledit dispositif de fermeture amovible interne poursuit un mouvement d'enlèvement jusqu'à y compris son enlèvement complet.

Avantageusement, suivant le procédé selon l'invention, ledit blocage dudit élément de commande en position de fermeture est opéré par l'intermédiaire d'un premier élément de blocage dudit mécanisme de blocage, une extrémité dudit premier élément de blocage venant en butée contre une saillie dudit dispositif de fermeture amovible interne ayant entamé son mouvement d'enlèvement.

De préférence, suivant le procédé selon l'invention, ledit blocage dudit élément de commande en position de fermeture est maintenu par l'intermédiaire d'un deuxième élément de blocage dudit mécanisme de blocage, ledit deuxième élément de blocage bloquant ledit premier élément de blocage.

Avantageusement, le procédé selon l'invention comprend une étape additionnelle de désactivation d'un dispositif de blocage additionnel depuis une première position de repos jusqu'à une deuxième position, ledit dispositif de blocage additionnel étant agencé pour bloquer ledit dispositif de fermeture amovible interne en l'absence dudit élément de connexion.

D'autres formes de réalisation du procédé suivant l'invention sont indiquées dans les revendications annexées.

L'invention a aussi pour objet une utilisation d'un système de connexion selon l'invention, pour transférer un fluide ou une poudre.

D'autres formes d'utilisation d'un système de connexion selon l'invention sont indiquées dans les revendications annexées.

L'invention a aussi pour objet une utilisation d'un dispositif de fermeture amovible interne selon l'invention, pour transférer un fluide ou une poudre.

D'autres formes d'utilisation d'un dispositif de fermeture amovible interne selon l'invention sont indiquées dans les revendications annexées.

D'autres caractéristiques, détails et avantages de l'invention ressortiront de la description donnée ci-après, à titre non limitatif et en faisant référence aux dessins annexés.
La figure 1 est une vue de face, du côté environnement extérieur au compartiment, et illustre une première configuration du système de connexion selon laquelle l'orifice de communication du système de connexion est prêt à recevoir un élément de connexion.
La figure 2 est une vue de face, du côté environnement intérieur du compartiment, et illustre une première configuration du système de connexion identique à celle de la figure 1 selon laquelle l'orifice de communication du système de connexion est prêt à recevoir un élément de connexion.
La figure 3 est une vue de face, du côté environnement extérieur au compartiment, et illustre une deuxième configuration du système de connexion selon laquelle un élément de connexion est inséré dans l'orifice de communication.
La figure 4 est une vue de face, du côté environnement extérieur au compartiment, et illustre une troisième configuration du système de connexion selon laquelle l'élément de connexion est bloqué contre la paroi de connexion par des éléments de commande.
La figure 5 est une vue de face, du côté environnement intérieur du compartiment, et illustre une troisième configuration du système de connexion identique à celle de la figure 4 selon laquelle l'élément de connexion est bloqué contre la paroi de connexion par des éléments de commande.
La figure 6 est une vue de face, du côté environnement intérieur du compartiment, et illustre une quatrième configuration du système de connexion selon laquelle un mouvement de rotation du dispositif de fermeture amovible est initié.
La figure 7 est une vue de face, du côté environnement intérieur du compartiment, et illustre une cinquième configuration du système de connexion selon laquelle le mouvement de rotation du dispositif de fermeture amovible est poursuivi.
La figure 8 est une vue de face, du côté environnement intérieur du compartiment, et illustre une sixième configuration du système de connexion selon laquelle le dispositif de fermeture amovible a été retiré.
La figure 9 illustre un dispositif de fermeture interne selon l'invention.

Sur les figures, les éléments identiques ou analogues portent les mêmes références.

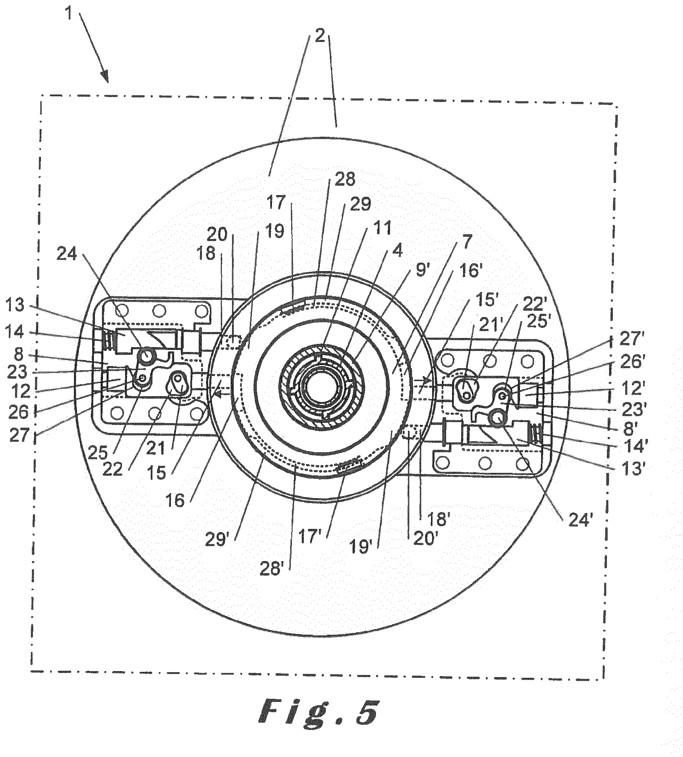

Selon un mode de réalisation suivant l'invention (tel qu'illustré aux figures ci-après), lorsque le mécanisme de blocage comprend un premier et un deuxième éléments de blocage, il peut être considéré, comme indiqué plus haut, qu'a lieu un premier blocage de l'élément de commande suivi par un deuxième blocage subséquent de ce même élément de commande lorsque le premier élément de blocage n'est plus en mesure d'assurer sa fonction de blocage. Selon ce mode de réalisation suivant l'invention, ledit deuxième blocage subséquent dudit élément de commande en position de fermeture est obtenu comme suit lors d'un mouvement (par exemple de rotation) opéré par le dispositif de fermeture interne pour réaliser son retrait à l'intérieur du compartiment. Lors du blocage dudit élément de commande en position de fermeture, le dispositif de fermeture interne est libéré (par passage de l'élément de commande depuis sa position d'ouverture dans sa position de fermeture) et peut tourner suite au retrait d'une extrémité d'un premier élément de blocage d'une encoche du dispositif de fermeture interne (voir les figures et en particulier la figure 5). Dès l'instant où le dispositif de fermeture interne entame son mouvement de rotation, une saillie de ce dispositif de fermeture interne se place face à l'extrémité rétractée du premier élément de blocage et constitue donc une butée pour cette extrémité. Une telle configuration empêche donc tout mouvement de retour du premier élément de blocage et par conséquent assure un blocage de l'élément de commande dans sa position de fermeture. Par la suite, lorsque le dispositif de fermeture interne poursuit son mouvement d'enlèvement (de rotation), le deuxième élément de blocage entre en jeu de telle sorte qu'il n'autorise plus aucun mouvement du premier élément de blocage, ce qui a pour conséquence d'empêcher tout mouvement de l'élément de commande qui reste dans sa position de fermeture comme explicité plus haut, même lorsque l'extrémité du premier élément de blocage ne se trouve plus bloqué par la butée.

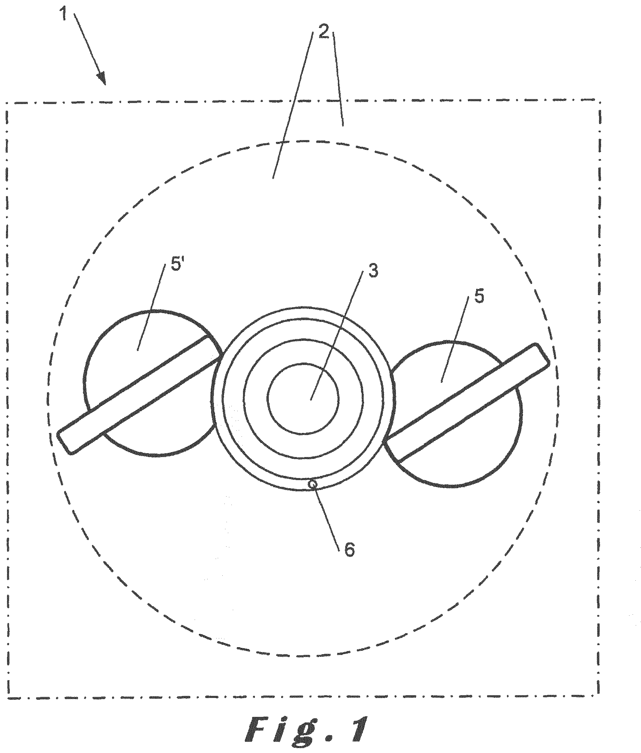

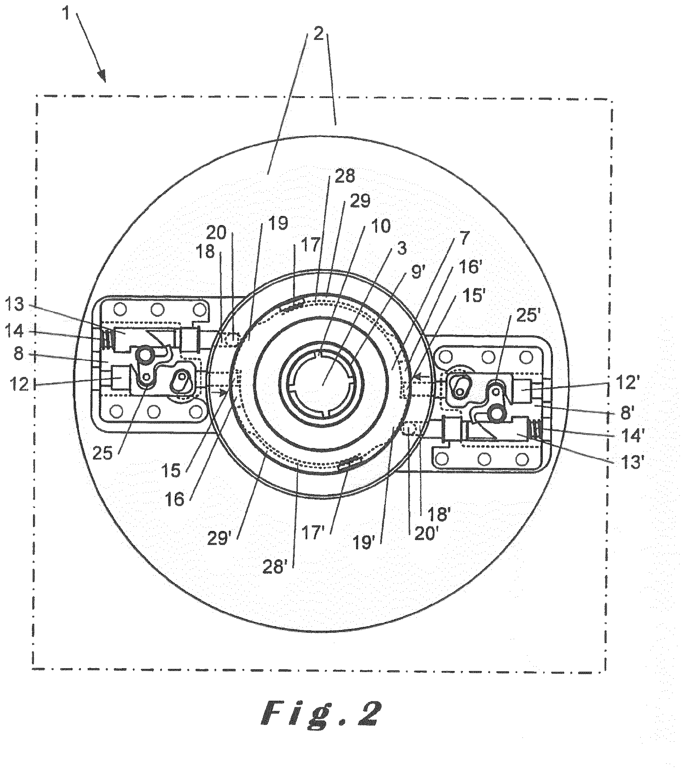

La figure 1 illustre une première configuration d'un système de connexion 1 selon laquelle, au niveau d'une paroi de connexion 2 d'un compartiment, est présent un orifice de communication 3 prêt à recevoir un élément de connexion 4. Selon ce mode de réalisation, sont présents deux éléments de commande 5, 5' qui sont en position ouverte afin que l'élément de connexion 4 puisse être inséré dans l'orifice de communication 3. Ces deux éléments de commande 5, 5' font partie chacun d'un dispositif de blocage 8, 8' (voir à la figure 2). Eventuellement, en périphérie de l'orifice de communication 3, est présent un ergot 6 (saillie) agencé pour empêcher la rotation de l'élément de connexion 4 lors du retrait (ou remise en place) du dispositif de fermeture amovible.

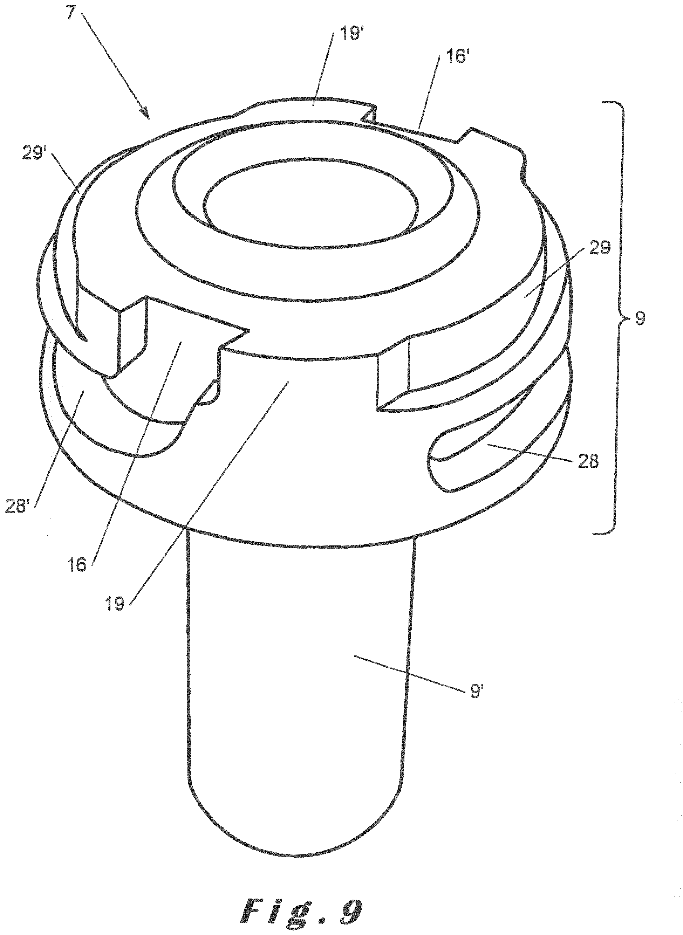

La figure 2 illustre, pour la même configuration que celle illustrée à la figure 1, le système de connexion 1 du côté environnement intérieur du compartiment. Comme illustré, le système de connexion 1 comprend un dispositif de fermeture amovible 7 (voir figure 9) et deux dispositifs de blocage 8, 8'.

Le dispositif de fermeture amovible 7 (voir figure 9) comprend une tête 9 et une tubulure centrale 9' s'étendant depuis la tête 9 vers l'intérieur du compartiment. Cette tubulure centrale 9' présente des gorges internes 10 agencées pour recevoir des saillies longitudinales présentes sur l'étui 11 monté sur le corps principal de l'élément de connexion 4. L'engagement des saillies de l'étui 11 dans les gorges 10 du dispositif de fermeture amovible 7 permet à ce dernier d'assurer un retrait simultané de l'étui 11 lors de son propre enlèvement à l'intérieur du compartiment.

Selon le mode de réalisation illustré à la figure 2, le dispositif de fermeture amovible 7 est maintenu en contact de façon étanche contre la paroi de connexion 2 du côté interne du compartiment en étant bloqué par deux saillies 17, 17' ayant initialement servi de guide pour engager le dispositif de fermeture amovible 7 dans un dispositif d'engagement (non illustré) s'étendant depuis la paroi de connexion 2 en direction du côté interne du compartiment. Plus particulièrement, des encoches 16, 16' présentes à la surface de la tête 9 du dispositif de fermeture amovible 7 sont agencées pour s'engager sur les saillies 17, 17' présentes à la surface interne du dispositif d'engagement. Les saillies 17, 17' servent donc initialement de guides pour les encoches 16, 16' ce qui permet de positionner correctement le dispositif de fermeture amovible 7 avant d'imposer à ce dernier un mouvement de rotation (de telle façon à effectuer un vissage en opérant un mouvement de rotation vers la droite) suite auquel les saillies 17, 17' le bloqueront de façon étanche au niveau du dispositif d'engagement contre la paroi de connexion 2.

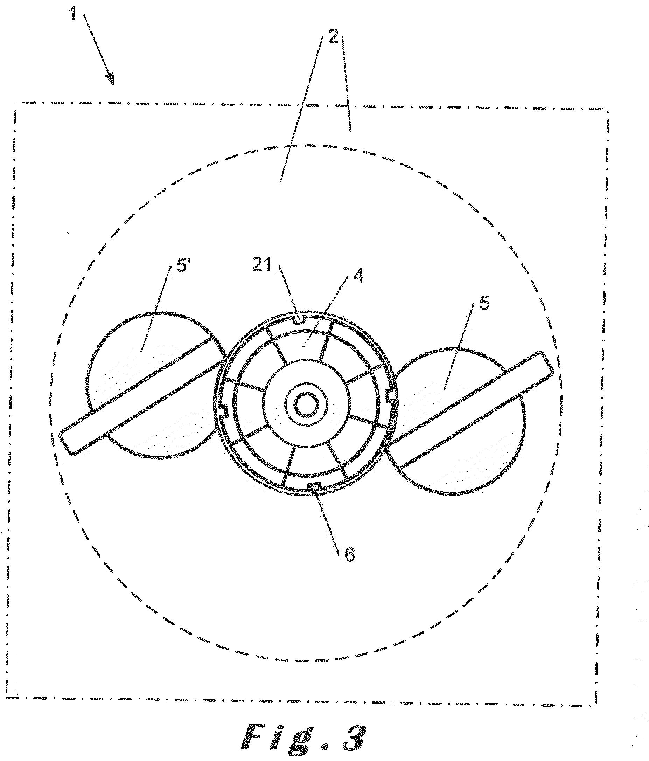

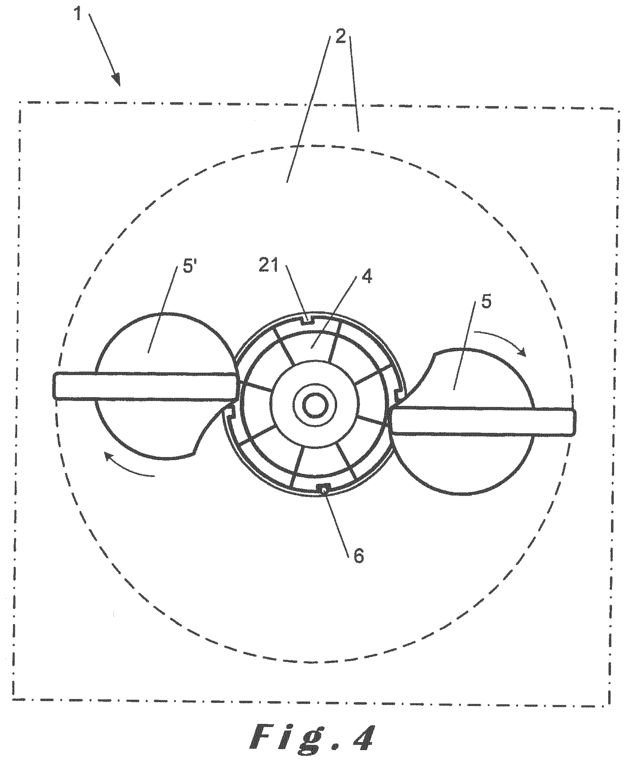

Chacun des dispositifs de blocage 8, 8' comprend les éléments suivants :
- au niveau de la paroi de connexion 2 côté environnement extérieur, un élément de commande 5, 5' (tel qu'illustré aux figures 1, 3 et 4), lequel présente une première position d'ouverture (telle qu'illustrée aux figures 1 et 3) et une deuxième position de fermeture (telle qu'illustrée à la figure 4),
- du côté environnement intérieur, un premier élément de blocage 12, 12' dont un mouvement de translation est commandé par l'élément de commande 5, 5', et
- du côté environnement intérieur, un deuxième élément de blocage 13, 13' comprenant un ressort 14, 14' et pouvant effectuer également un mouvement de translation indépendant de celui effectué par le premier élément de blocage 12, 12'.

Selon la configuration illustrée à la figure 2, c'est-à-dire selon la configuration dans laquelle le dispositif de fermeture amovible 7 est en place et bloqué de façon étanche contre la paroi de connexion 2 et selon laquelle l'orifice de communication 3 du système de connexion 1 et la tubulure centrale 9' du dispositif de fermeture amovible 7 sont prêts à recevoir un élément de connexion 4, une extrémité 15, 15' du premier élément de blocage 12, 12' est engagée dans une encoche 16, 16' présente à la surface de la tête 9 du dispositif de fermeture amovible 7. En parallèle, comme illustré à la figure 1, l'élément de commande 5 est en position ouverte pour permettre l'insertion de l'élément de connexion 4 dans l'orifice de communication 3 mais aussi dans la tubulure centrale 9' du dispositif de fermeture amovible 7. Puisque l'extrémité 15, 15' du premier élément de blocage 12, 12' est engagé dans l'encoche 16, 16' du dispositif de fermeture amovible 7, tout mouvement de dévissage de ce dernier est empêché puisque les bords (parois) de l'encoche 16, 16' vont buter contre l'extrémité 15, 15' du premier élément de blocage 12, 12'.

Toujours selon la configuration illustrée à la figure 2, une extrémité 18, 18' du deuxième élément de blocage 13, 13' est positionnée sur une saillie 19, 19' du dispositif de fermeture amovible 7 de telle sorte que le ressort 14 est comprimé. Cette extrémité 18, 18' du deuxième élément de blocage 13, 13' est munie d'une roulette (galet) 20, 20' prenant appui, dans la configuration selon la figure 2, sur la saillie 19 du dispositif de fermeture amovible 7.

La figure 3 illustre une deuxième configuration du système de connexion 1 selon laquelle un élément de connexion 4 est inséré dans l'orifice de communication 3. Comme illustré sur cette figure, une encoche 21 présente au niveau de l'élément de connexion 4 s'engage au niveau d'un ergot 6 (saillie) agencé pour empêcher la rotation de l'élément de connexion 4 lors du retrait (ou remise en place) du dispositif de fermeture amovible.

La figure 4 illustre une troisième configuration du système de connexion 1 selon laquelle l'élément de connexion 4 est bloqué contre la paroi de connexion 2 par des éléments de commande 5, 5'. Ce blocage de l'élément de connexion 4 est obtenu par actionnement, selon un mouvement rotatif (indiqué par les flèches), des boutons de commande 5, 5', ce qui a pour effet, d'une part, de sécuriser l'élément de connexion 4 afin qu'il ne puisse pas se désengager de l'orifice de communication 3 et du dispositif de fermeture amovible 7 et, d'autre part, d'assurer un positionnement étanche de l'élément de connexion 4, notamment en l'écrasant contre un joint situé au niveau de l'orifice de communication 3 et de la paroi de connexion 2.

La figure 5 illustre, pour la même configuration que celle illustrée à la figure 4, le système de connexion 1 du côté environnement intérieur du compartiment. L'élément de connexion 4 est inséré dans l'orifice de communication 3 et dans le dispositif de fermeture amovible 7, en particulier dans la tubulure centrale 9' de ce dernier, des gorges internes 10 de la tubulure centrale 9' accueillant des saillies longitudinales présentes sur l'étui 11 monté sur le corps principal de l'élément de connexion 4.

Comme illustré, l'actionnement des boutons de commande 5, 5', a pour effet de rétracter l'extrémité 15, 15' du premier élément de blocage 12, 12' selon un mouvement de translation (dans le sens indiqué par les flèches) de telle sorte qu'il quitte l'encoche 16, 16' présente à la surface de la tête 9 du dispositif de fermeture amovible 7. Par conséquent, le dispositif de fermeture amovible 7 est libéré et peut être manipulé afin de l'enlever à l'intérieur du compartiment de telle sorte que l'étui de l'élément de connexion 4 soit retiré simultanément. Dans cette configuration, le deuxième élément de blocage 13, 13' n'a pas encore effectué de mouvement : une extrémité 18, 18' du deuxième élément de blocage 13, 13' est positionnée sur une saillie 19, 19' du dispositif de fermeture amovible 7 de telle sorte que le ressort 14, 14' est comprimé.

Le mouvement de translation du premier élément de blocage 12, 12' est obtenu par actionnement de l'élément de commande 5, 5', lequel va entraîner le mouvement d'une came 21, 21' dans son logement 22, 22'. Ce mouvement de la came 21, 21' dans son logement 22, 22' va non seulement permettre le retrait de l'extrémité 15, 15' du premier élément de blocage 12, 12' hors de l'encoche 16, 16', mais va également induire un mouvement de rotation d'un élément pivotant 23, 23' autour de son axe 24, 24' relié à la paroi de connexion 2, ceci par entraînement d'un galet rotatif 25, 25' monté sur un axe 26, 26' solidaire dudit élément pivotant, dans une cavité 27, 27'.

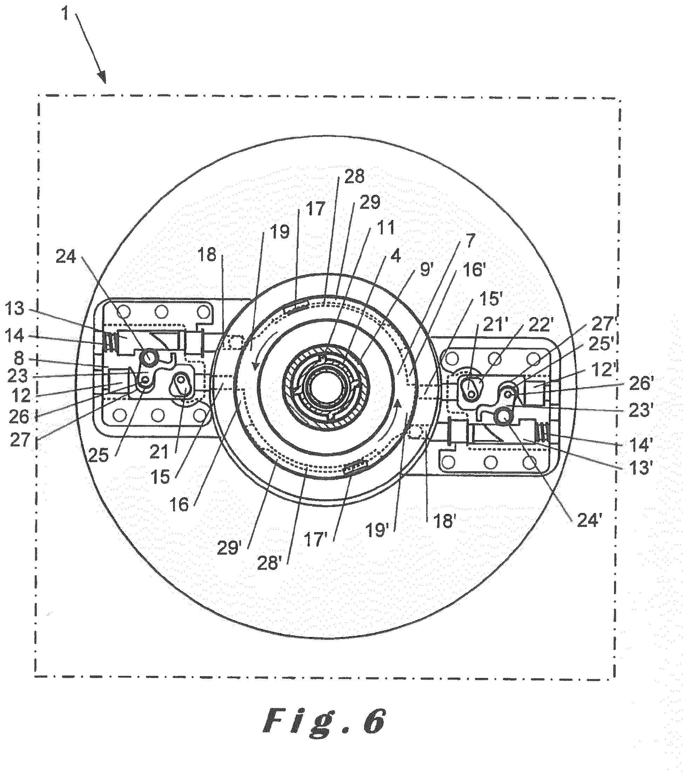

La figure 6 illustre une quatrième configuration du système de connexion 1 selon laquelle le dispositif de fermeture amovible 7 entame un mouvement de rotation (dans le sens anti-horlogique comme illustré par les flèches) opéré afin d'effectuer son retrait à l'intérieur du compartiment de façon simultanée avec l'étui 11 monté sur le corps principal de l'élément de connexion 4. Ce mouvement initial de rotation a pour effet que, en début de rotation, la saillie 19, 19' du dispositif de fermeture amovible 7 se retrouve face à l'extrémité 15, 15' du premier élément de blocage 12, 12' préalablement rétractée lors de l'actionnement de l'élément de commande 5, 5' pour obtenir sa position de fermeture. Dès lors que cette extrémité 15, 15' du premier élément de blocage 12, 12' est face à la saillie 19, 19' du dispositif de fermeture amovible 7, cette saillie 19, 19' constitue une butée contre laquelle est bloquée l'extrémité 15, 15' du premier élément de blocage 12, 12', ce qui rend impossible tout mouvement de translation de ce premier élément de blocage 12, 12' et bloque donc l'élément de commande 5, 5' dans sa position de fermeture. Il en découle que l'élément de connexion 4 est donc sécurisé au niveau de la paroi de connexion 2 du côté environnement extérieur et qu'il est impossible, par exemple via une erreur de manipulation, de faire passer l'élément de commande 5, 5' de sa position de fermeture à sa position d'ouverture : ceci garantit donc que l'élément de connexion 4 reste en place de façon étanche et assure bien la stérilité de l'environnement intérieur du compartiment dès que le dispositif de fermeture amovible 7 amorce un mouvement de rotation en vue de son enlèvement à l'intérieur du compartiment.

L'extrémité 18, 18' du deuxième élément de blocage 13, 13' est quant à elle, lorsqu'un mouvement de rotation du dispositif de fermeture amovible 7 est entamé, toujours localisée sur la saillie 19 du dispositif de fermeture amovible 7.

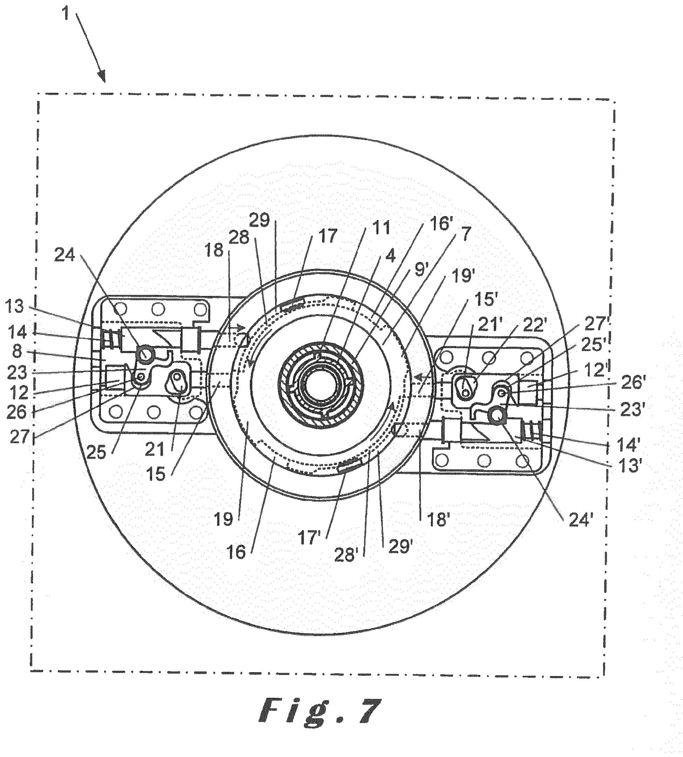

La figure 7 illustre une cinquième configuration du système de connexion 1 selon laquelle le dispositif de fermeture amovible 7 poursuit son mouvement de rotation (dans le sens anti-horlogique comme illustré par les flèches) opéré afin d'effectuer son retrait à l'intérieur du compartiment de façon simultanée avec l'étui monté sur le corps principal de l'élément de connexion 4. Comme illustré, puisque le dispositif de fermeture amovible 7 poursuit son mouvement de rotation en dévissage, à un moment donné l'extrémité 15, 15' du premier élément de blocage 12, 12' ne se retrouve plus en face de la saillie 19, 19' du dispositif de fermeture amovible 7. Dès ce moment, puisque la saillie 19, 19' du dispositif de fermeture amovible 7 ne constitue plus une butée pour l'extrémité 15, 15' du premier élément de blocage 12, 12', un actionnement de l'élément de commande 5, 5' serait possible et un risque potentiel de désengagement de l'élément de connexion 4 au niveau de l'orifice de communication 3 serait observé, par exemple en cas d'erreur de manipulation du système de connexion 1. En effet, si un opérateur faisait passer l'élément de commande 5, 5' de sa position de fermeture à sa position d'ouverture à ce moment-là, un désengagement de l'élément de connexion 4 serait possible et compromettrait l'étanchéité du compartiment. Toutefois, suivant l'invention, avant que la saillie 19, 19' du dispositif de fermeture amovible 7 ne constitue plus une butée pour l'extrémité 15, 15' du premier élément de blocage 12, 12', le deuxième élément de blocage 13, 13' prend le relais pour assurer que l'élément de commande 5, 5' soit bien maintenu dans sa position de fermeture. En effet, selon la configuration illustrée à la figure 7, à l'instant où la saillie 19, 19' du dispositif de fermeture amovible 7 ne constitue plus une butée pour l'extrémité 15, 15', l'extrémité 18, 18' du deuxième élément de blocage 13, 13' ne se trouve déjà plus sur la saillie 19, 19' du dispositif de fermeture amovible 7 mais bien dans une rampe 29, 29' du dispositif de fermeture amovible 7. En effet, puisque l'extrémité 18, 18' n'est plus en appui sur la saillie 19, 19' du dispositif de fermeture amovible 7, le ressort 14, 14' se détend, pousse et maintient cette extrémité 18, 18' dans la rampe 29, 29'. Il s'opère ainsi un mouvement de translation du deuxième élément de blocage (comme illustré par les flèches) faisant en sorte qu'une partie pleine P du deuxième élément de blocage 13, 13' se trouve en face d'une extrémité 30, 30' de l'élément pivotant 23, 23'. Cette partie pleine P du deuxième élément de blocage 13, 13' constitue alors une butée pour cette extrémité 30, 30' de l'élément pivotant 23, 23', ce qui rend impossible tout mouvement de translation du premier élément de blocage 12, 12' et donc tout mouvement de l'élément de commande 5, 5' qui continue bien à assurer l'étanchéité du compartiment lorsque le dispositif de fermeture amovible 7 poursuit un mouvement de rotation en vue de son enlèvement à l'intérieur du compartiment.

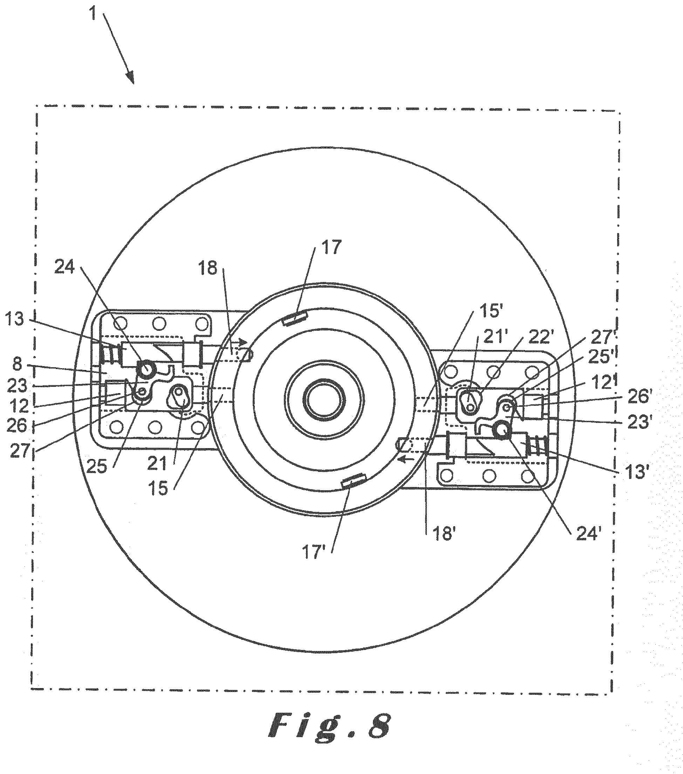

La figure 8 illustre une sixième configuration du système de connexion 1 selon laquelle le dispositif de fermeture amovible 7 a été retiré à l'intérieur du compartiment de façon simultanée avec l'étui 11 monté sur le corps principal de l'élément de connexion 4. Comme illustré, le deuxième élément de blocage 13, 13' permet d'assurer que tout mouvement de l'élément de commande 5, 5' est impossible, ce qui contribue, comme indiqué ci-dessus, à assurer la stérilité de l'environnement intérieur du compartiment lorsque le dispositif de fermeture amovible 7 est enlevé.

La figure 9 illustre un dispositif de fermeture interne 7 selon l'invention. Ce dispositif de fermeture interne 7 comprend une partie de tête 9 et une tubulure centrale 9' agencée pour recevoir un élément de connexion 4. Au niveau de la partie de tête 9, le dispositif de fermeture interne 7 présente des encoches 16, 16', des saillies 19, 19', des rainures 28, 28' et des rampes 29, 29'.

Il est bien entendu que la présente invention n'est en aucune façon limitée aux formes de réalisations décrites ci-dessus et que bien des modifications peuvent y être apportées sans sortir du cadre des revendications annexées.

Par exemple, si les figures illustrent ici l'enlèvement du dispositif de fermeture interne, il est évident que la présente invention couvre également un repositionnement de ce dispositif de fermeture interne, la séquence des étapes mise en oeuvre étant simplement inversée.

## Revendications

1. Système de connexion (1) pour connecter un environnement intérieur d'un compartiment à un environnement extérieur audit compartiment, ledit compartiment étant isolé par rapport audit environnement extérieur et ledit système de connexion (1) comprenant :
- une paroi de connexion (2) pour séparer ledit environnement intérieur dudit environnement extérieur, ladite paroi de connexion (2) présentant un orifice de communication (3) agencé pour recevoir un élément de connexion (4) traversant présentant un corps principal sur lequel est monté un étui de façon amovible, et
- un dispositif de fermeture amovible interne (7) audit compartiment agencé pour sceller de façon étanche ledit orifice de communication (3) dudit compartiment, agencé pour pouvoir être accouplé de façon séparable avec ledit étui monté sur ledit corps principal dudit élément de connexion (4) et agencé de telle sorte que, lors de son enlèvement à l'intérieur dudit compartiment, il permet un enlèvement simultané dudit étui en le désolidarisant dudit corps principal dudit élément de connexion (4),
ledit système de connexion (1) comprenant en outre un dispositif de blocage (8), ledit dispositif de blocage (8) comprenant, au niveau de ladite paroi de connexion (2) côté environnement extérieur, un élément de commande (5, 5') d'un mécanisme de blocage, ledit élément de commande (5, 5') présentant
- une première position d'ouverture pour permettre une insertion dudit élément de connexion (4) dans ledit orifice de communication (3) et dans ledit dispositif de fermeture amovible interne (7) et pour commander ledit mécanisme de blocage pour qu'il bloque tout mouvement dudit dispositif de fermeture amovible interne (7), et
- une deuxième position de fermeture pour bloquer ledit élément de connexion (4) reçu dans ledit orifice de communication (3) au niveau de ladite paroi de connexion (2) côté extérieur et pour permettre audit mécanisme de blocage d'autoriser un mouvement dudit dispositif de fermeture amovible interne (7),
ledit mécanisme de blocage étant agencé pour
- effectuer un blocage dudit élément de commande (5, 5') en position de fermeture dès une initiation d'un mouvement d'enlèvement dudit dispositif de fermeture amovible interne (7), et
- maintenir, lors d'une poursuite dudit mouvement d'enlèvement dudit dispositif de fermeture amovible interne (7) et jusqu'à et y compris son enlèvement complet, ledit blocage dudit élément de commande (5, 5') en position de fermeture.

2. Système de connexion (1) selon la revendication 1, caractérisé en ce ledit mécanisme de blocage dudit dispositif de blocage (8) comprend
- un premier élément de blocage (12, 12') agencé pour effectuer un blocage dudit élément de commande (5, 5') en position de fermeture dès une initiation d'un mouvement d'enlèvement dudit dispositif de fermeture amovible interne (7), et
- un deuxième élément de blocage (13, 13') agencé pour maintenir, lors d'une poursuite dudit mouvement d'enlèvement dudit dispositif de fermeture amovible interne (7) et jusqu'à et y compris son enlèvement complet, ledit blocage dudit élément de commande (5, 5') en position de fermeture.

3. Système de connexion (1) selon la revendication 1 ou 2, **caractérisé en ce qu'**il comprend en outre un dispositif de blocage additionnel agencé pour, dans une première position de repos, assurer un blocage dudit dispositif de fermeture amovible interne (7) et empêcher une introduction dudit élément de connexion (4) dans ledit orifice de communication (3) et pour, dans une deuxième position, être repoussé pour permettre une introduction dudit élément de connexion (4) dans ledit orifice de communication (3) et débloquer ledit blocage additionnel dudit dispositif de fermeture amovible interne (7).

4. Système de connexion (1) selon l'une quelconque des revendications 1 à 3, **caractérisé en ce que** ledit élément de commande (5, 5') est un élément de commande mécanique se présentant sous la forme d'un bouton de commande, éventuellement sous la forme d'un bouton de commande rotatif.

5. Système de connexion (1) selon l'une quelconque des revendications 2 à 4, **caractérisé en ce que** ledit premier élément de blocage (12, 12') comprend un logement (22) agencé pour accueillir une came (21), laquelle est agencée pour être actionnée par ledit élément de commande (5, 5') de telle sorte à imposer un mouvement de translation audit premier élément de blocage (12, 12').

6. Système de connexion selon l'une quelconque des revendications 2 à 5, **caractérisé en ce que** ledit premier élément de blocage (12, 12') comprend en outre un élément pivotant (23, 23') présentant une extrémité libre (30, 30') et tournant autour d'un axe (24, 24'), ledit élément pivotant (23, 23') étant agencé pour effectuer un mouvement de rotation lors d'un mouvement de translation dudit premier élément de blocage (12, 12').

7. Système de connexion (1) selon l'une quelconque des revendications 2 à 6, **caractérisé en ce que** ledit deuxième élément de blocage (13, 13') comprend un ressort (14, 14') agencé pour lui imposer un mouvement de rappel.

8. Système de connexion (1) selon l'une quelconque des revendications 2 à 7, **caractérisé en ce que** ledit deuxième élément de blocage (13, 13') présente une extrémité libre (18, 18') munie d'une roulette (20, 20').

9. Dispositif de fermeture amovible interne (7) d'un système de connexion selon l'une quelconque des revendications 1 à 8, ledit dispositif de fermeture amovible interne (7) comprenant
- une partie de tête (9) présentant un orifice traversant central (9"), et
- une tubulure (9') s'étendant depuis ladite partie de tête (9) en prolongement dudit orifice traversant central (9"),
ladite partie de tête (9) comprenant sur son pourtour
- une saillie (19, 19') située à un premier niveau,
- une rampe (29, 29') en prolongement de ladite saillie (19, 19'), ladite rampe (29, 29') étant située à un deuxième niveau inférieur audit premier niveau, et
- une encoche (16, 16') agencée pour donner accès à une rainure (28, 28'), ladite rainure (28, 28') étant située à un niveau inférieur audit deuxième niveau.

10. Procédé de connexion d'un environnement intérieur d'un compartiment à un environnement extérieur audit compartiment, ledit procédé comprenant, les étapes de
- une introduction, via un orifice de communication (3) d'une paroi de connexion (2) séparant ledit environnement intérieur dudit environnement extérieur, d'un élément de connexion (4) présentant un corps principal pour permettre son engagement dans un dispositif de fermeture amovible interne (7) préalablement positionné et bloqué de telle sorte à sceller de façon étanche ledit orifice de communication (3),
- un actionnement d'un élément de commande (5, 5') situé du côté environnement extérieur pour le positionner dans une position de fermeture afin de sécuriser et de bloquer ledit élément de connexion (4) contre ladite paroi de connexion (2) au niveau dudit orifice de communication (3) et afin de débloquer ledit dispositif de fermeture amovible interne (7) et d'en autoriser un mouvement d'enlèvement,
- une mise en mouvement dudit dispositif de fermeture amovible interne (7) pour permettre son enlèvement à l'intérieur dudit compartiment de façon simultanée avec un enlèvement d'un étui protégeant ledit corps principal dudit élément de connexion (4), ladite étape de mise en mouvement dudit dispositif de fermeture amovible interne (7) donnant lieu
- à un blocage dudit élément de commande (5, 5') dans sa position de fermeture par l'intermédiaire d'un mécanisme de blocage dès que ledit dispositif de fermeture amovible interne (7) entame un mouvement d'enlèvement, et
- à un maintien dudit blocage dudit élément de commande (5, 5') en position de fermeture par l'intermédiaire dudit mécanisme de blocage lorsque ledit dispositif de fermeture amovible interne (7) poursuit un mouvement d'enlèvement, jusqu'à y compris son enlèvement complet.

11. Procédé de connexion selon la revendication 10, **caractérisé en ce que** ledit blocage dudit élément de commande (5, 5') en position de fermeture est opéré par l'intermédiaire d'un premier élément de blocage (12, 12') dudit mécanisme de blocage, une extrémité (15, 15') dudit premier élément de blocage (12, 12') venant en butée contre une saillie (19, 19') dudit dispositif de fermeture amovible interne (7) ayant entamé son mouvement d'enlèvement.

12. Procédé de connexion selon la revendication 11, **caractérisé en ce que** ledit blocage dudit élément de commande (5, 5') en position de fermeture est maintenu par l'intermédiaire d'un deuxième élément de blocage (13, 13') dudit mécanisme de blocage , ledit deuxième élément de blocage (13, 13') bloquant ledit premier élément de blocage.

13. Procédé de connexion selon l'une quelconque des revendications 10 à 12, **caractérisé en ce qu'**il comprend une étape additionnelle de désactivation d'un dispositif de blocage additionnel depuis une première position de repos jusqu'à une deuxième position, ledit dispositif de blocage additionnel étant agencé pour bloquer ledit dispositif de fermeture amovible interne (7) en l'absence dudit élément de connexion (4).

14. Utilisation d'un système de connexion (1) selon l'une quelconque des revendications 1 à 8, pour transférer un fluide ou une poudre.

15. Utilisation d'un dispositif de fermeture amovible interne (7) selon la revendication 9, pour transférer un fluide ou une poudre.

## Patentansprüche

1. Verbindungssystem (1), um eine Innenumgebung einer Kammer mit einer Umgebung außerhalb der Kammer zu verbinden, wobei die Kammer in Bezug auf die Außenumgebung isoliert ist und das Verbindungssystem (1) umfasst:
- eine Verbindungswand (2), um die Innenumgebung von der Außenumgebung zu trennen, wobei die Verbindungswand (2) eine Kommunikationsöffnung (3) aufweist, die dafür eingerichtet ist, ein hindurchgehendes Verbindungselement (4) aufzunehmen, welches einen Grundkörper aufweist, an dem eine Hülse in abnehmbarer Weise montiert ist, und
- eine abnehmbare Innenverschlussvorrichtung (7) der Kammer, die dafür eingerichtet ist, die Kommunikationsöffnung (3) der Kammer in dichter Weise zu versiegeln, dafür eingerichtet ist, in trennbarer Weise mit der am Grundkörper des Verbindungselements (4) montierten Hülse gekoppelt werden zu können, und derart eingerichtet ist, dass sie bei ihrem Entfernen im Inneren der Kammer ein gleichzeitiges Entfernen der Hülse ermöglicht, indem sie dieselbe vom Grundkörper des Verbindungselements (4) löst,
wobei das Verbindungssystem (1) weiter eine Sperrvorrichtung (8) umfasst, wobei die Sperrvorrichtung (8) auf Ebene der Verbindungswand (2) auf Außenumgebungsseite ein Steuerelement (5, 5') eines Sperrmechanismus umfasst, wobei das Steuerelement (5, 5') aufweist
- eine erste Öffnungsstellung, um ein Einführen des Verbindungselements (4) in die Kommunikationsöffnung (3) und in die abnehmbare Innenverschlussvorrichtung (7) zu ermöglichen und um den Sperrmechanismus zu steuern, sodass er jede Bewegung der abnehmbaren Innenverschlussvorrichtung (7) sperrt, und
- eine zweite Verschlussstellung, um das in der Kommunikationsöffnung (3) aufgenommene Verbindungselement (4) auf Ebene der Verbindungswand (2) auf Außenseite zu sperren und um dem Sperrmechanismus zu ermöglichen, eine Bewegung der abnehmbaren Innenverschlussvorrichtung (7) zu gestatten,
wobei der Sperrmechanismus dafür eingerichtet ist
- eine Sperrung des Steuerelements (5, 5') in Verschlussstellung auszuführen, sobald eine Initiierung einer Entfernungsbewegung der abnehmbaren Innenverschlussvorrichtung (7) erfolgt, und
- bei einer Weiterführung der Entfernungsbewegung der abnehmbaren Innenverschlussvorrichtung (7) und bis zu und einschließlich ihrer vollständigen Entfernung die Sperrung des Steuerelements (5, 5') in Verschlussstellung aufrecht zu erhalten.

2. Verbindungssystem (1) nach Anspruch 1,
**dadurch gekennzeichnet, dass** der Sperrmechanismus der Sperrvorrichtung (8) umfasst
- ein erstes Sperrelement (12, 12'), das dafür eingerichtet ist, eine Sperrung des Steuerelements (5, 5') in Verschlussstellung auszuführen, sobald eine Initiierung einer Entfernungsbewegung der abnehmbaren Innenverschlussvorrichtung (7) erfolgt, und
- ein zweites Sperrelement (13, 13'), das dafür eingerichtet ist, bei einer Weiterführung der Entfernungsbewegung der abnehmbaren Innenverschlussvorrichtung (7) und bis zu und einschließlich ihrer vollständigen Entfernung die Sperrung des Steuerelements (5, 5') in Verschlussstellung aufrecht zu erhalten.

3. Verbindungssystem (1) nach Anspruch 1 oder 2,
**dadurch gekennzeichnet, dass** es weiter eine zusätzliche Sperrvorrichtung umfasst, die dafür eingerichtet ist, in einer ersten Ruhestellung eine Sperrung der abnehmbaren Innenverschlussvorrichtung (7) sicherzustellen und ein Einführen des Verbindungselements (4) in die Kommunikationsöffnung (3) zu verhindern, und dafür, in einer zweiten Stellung verschoben zu werden, um ein Einführen des Verbindungselements (4) in die Kommunikationsöffnung (3) zu ermöglichen und die zusätzliche Sperrung der abnehmbaren Innenverschlussvorrichtung (7) freizugeben.

4. Verbindungssystem (1) nach einem der Ansprüche 1 bis 3, **dadurch gekennzeichnet, dass** das Steuerelement (5, 5') ein mechanisches Steuerelement ist, das sich in der Form eines Steuerungsknopfes, gegebenenfalls in der Form eines Steuerungsdrehknopfes präsentiert.

5. Verbindungssystem (1) nach einem der Ansprüche 2 bis 4, **dadurch gekennzeichnet, dass** das erste Sperrelement (12, 12') eine Aufnahme (22) umfasst, die dafür eingerichtet ist, eine Nocke (21) aufzunehmen, welche dafür eingerichtet ist, von dem Steuerelement (5, 5') derart betätigt zu werden, dass sie dem ersten Sperrelement (12, 12') eine Translationsbewegung aufzwingt.

6. Verbindungssystem nach einem der Ansprüche 2 bis 5, **dadurch gekennzeichnet, dass** das erste Sperrelement (12, 12') weiter ein Schwenkelement (23, 23') umfasst, das ein freies und um eine Achse (24, 24') drehendes Ende (30, 30') aufweist, wobei das Schwenkelement (23, 23') dafür eingerichtet ist, bei einer Translationsbewegung des ersten Sperrelements (12, 12') eine Drehbewegung auszuführen.

7. Verbindungssystem (1) nach einem der Ansprüche 2 bis 6, **dadurch gekennzeichnet, dass** das zweite Sperrelement (13, 13') eine Feder (14, 14') umfasst, die dafür eingerichtet ist, ihm eine Rückstellbewegung aufzuzwingen.

8. Verbindungssystem (1) nach einem der Ansprüche 2 bis 7, **dadurch gekennzeichnet, dass** das zweite Sperrelement (13, 13') ein freies Ende (18, 18') aufweist, das mit einer Rolle (20, 20') ausgestattet ist.

9. Abnehmbare Innenverschlussvorrichtung (7) eines Verbindungssystems nach einem der Ansprüche 1 bis 8, wobei die abnehmbare Innenverschlussvorrichtung (7) umfasst
- ein Kopfteil (9), das eine zentrale Durchgangsöffnung (9") aufweist, und
- einen Stutzen (9'), der sich ab dem Kopfteil (9) in Verlängerung der zentralen Durchgangsöffnung (9") erstreckt,
wobei das Kopfteil (9) an seinem Umfang umfasst
- einen Vorsprung (19, 19'), der auf einer ersten Ebene liegt,
- eine Rampe (29, 29') in Verlängerung des Vorsprungs (19, 19'), wobei die Rampe (29, 29') auf einer zweiten Ebene unterhalb der ersten Ebene liegt, und
- eine Aussparung (16, 16'), die dafür eingerichtet ist, Zugang zu einer Rille (28, 28') zu geben, wobei die Rille (28, 28') auf einer Ebene unterhalb der zweiten Ebene liegt.

10. Verfahren zum Verbinden einer Innenumgebung einer Kammer mit einer Umgebung außerhalb der Kammer, wobei das Verfahren die Schritte umfasst
- eines Einführens, über eine Kommunikationsöffnung (3) einer Verbindungswand (2), welche die Innenumgebung von der Außenumgebung trennt, eines Verbindungselements (4), welches einen Grundkörper aufweist, um sein Eingreifen in eine abnehmbare Innenverschlussvorrichtung (7) zu ermöglichen, die zuvor derart positioniert und gesperrt wurde, dass sie die Kommunikationsöffnung (3) in dichter Weise versiegelt,
- eines Betätigens eines auf der Außenumgebungseite liegenden Steuerelements (5, 5'), um es in einer Verschlussstellung zu positionieren, um das Verbindungselement (4) gegen die Verbindungswand (2) auf Ebene der Kommunikationsöffnung (3) zu sichern und zu sperren, und um die abnehmbare Innenverschlussvorrichtung (7) freizugeben und eine Entfernungsbewegung derselben zu gestatten,
- eines Inbewegungbringens der abnehmbaren Innenverschlussvorrichtung (7), um ihr Entfernen im Inneren der Kammer gleichzeitigerweise mit einem Entfernen einer Hülle zu ermöglichen, welche den Grundkörper des Verbindungselements (4) schützt, wobei der Schritt des Inbewegungbringens der abnehmbaren Innenverschlussvorrichtung (7) führt
- zu einer Sperrung des Steuerelements (5, 5') in seiner Verschlussstellung mittels eines Sperrmechanismus, sobald die abnehmbare Innenverschlussvorrichtung (7) eine Entfernungsbewegung beginnt, und
- zu einer Aufrechterhaltung der Sperrung des Steuerelements (5, 5') in Verschlussstellung mittels des Sperrmechanismus, wenn die abnehmbare Innenverschlussvorrichtung (7) eine Entfernungsbewegung bis einschließlich zu ihrer vollständigen Entfernung weiterführt.

11. Verbindungsverfahren nach Anspruch 10, **dadurch gekennzeichnet, dass** die Sperrung des Steuerelements (5, 5') in Verschlussstellung mittels eines ersten Sperrelements (12, 12') des Sperrmechanismus vorgenommen wird, wobei ein Ende (15, 15') des ersten Sperrelements (12, 12') in Anschlag gegen einen Vorsprung (19, 19') der abnehmbaren Innenverschlussvorrichtung (7) kommt, welche ihre Entfernungsbewegung begonnen hat.

12. Verbindungsverfahren nach Anspruch 11, **dadurch gekennzeichnet, dass** die Sperrung des Steuerelements (5, 5') in Verschlussstellung mittels eines zweiten Sperrelements (13, 13') des Sperrmechanismus aufrecht erhalten wird, wobei das zweite Sperrelement (13, 13') das erste Sperrelement sperrt.

13. Verbindungsverfahren nach einem der Ansprüche 10 bis 12, **dadurch gekennzeichnet, dass** es einen zusätzlichen Schritt des Deaktivierens einer zusätzlichen Sperrvorrichtung ab einer ersten Ruhestellung bis zu einer zweiten Stellung umfasst, wobei die zusätzliche Sperrvorrichtung dafür eingerichtet ist, die abnehmbare Innenverschlussvorrichtung (7) bei Fehlen des Verbindungselements (4) zu sperren.

14. Verwendung eines Verbindungssystems (1) nach einem der Ansprüche 1 bis 8, um ein Fluid oder ein Pulver zu transferieren.

15. Verwendung einer abnehmbaren Innenverschlussvorrichtung (7) nach Anspruch 9, um ein Fluid oder ein Pulver zu transferieren.

## Claims

1. A connection system (1) for connecting an inside environment of a compartment to an environment outside said compartment, said compartment being isolated relative to the outside environment and the connection system (1) comprising:
a connecting wall (2) to separate said inside environment from said outside environment, said connecting wall (2) having a communication orifice (3) arranged to receive a through connecting element (4) having a main body on which a case is removably mounted, and
an innner removable closing device (7) inside said compartment arranged to tightly seal said communication orifice (3) of said compartment, arranged to be able to be coupled separately with said case mounted on said main body of said connecting element (4) and arranged such that, when it is removed from the inside of the compartment, it allows a simultaneous removal of said case by separating it from said main body of said connecting element (4),
said connection system (1) further comprising a blocking device (8), said blocking device (8) comprising, at said connecting wall (2) on the outside environment side, a control element (5, 5') for controlling a blocking mechanism, said control element (5, 5') having
- a first open position to allow said connecting element (4) to be inserted into said communication orifice (3) and into said inner removable closing device (7) and to control said blocking mechanism so that it blocks any movement by said inner removable blocking device (7), and
- a second closing position to block said connecting element (4) received in said communication orifice (3) at said connecting wall (2) on the outer side and to allow said blocking mechanism to authorize a movement of said inner removable closing device (7),
said blocking mechanism being arranged to
- block said control element (5, 5') in the closed position once a movement has been initiated to remove said inner removable closing device (7), and
- maintain said blocking movement of said control element (5, 5') in the closed position during a continuation of said movement to remove said inner removable closing device (7), up to and including its complete removal.

2. The connection system (1) according to claim 1,
**characterized in that** said blocking mechanism of said blocking device (8) comprises a first blocking element (12, 12') arranged to perform a first blocking of said control element (5, 5') in the closed position once a movement has been initiated to remove said inner removable closing device (7), and
a second blocking element (13, 13') arranged to maintain said blocking movement of said control element (5, 5') in the closed position during a continuation of said movement to remove said inner removable closing device (7), up to and including its complete removal.

3. The connection system (1) according to claim 1 or 2,
**characterized in that** it further comprises an additional blocking device arranged so as, in a first idle position, to ensure additional blocking for said inner removable closing device (7) and prevent an insertion of said connecting element (4) into said communication orifice (3), and so as, in a second position, to be pushed back to allow said connecting element (4) to be inserted into said communication orifice (3) and unblock said additional blocking of said inner removable closing device (7).

4. The connection system (1) according to any one of claims 1 to 3, **characterized in that** said control element (5, 5') is a mechanical control element assuming the form of a control button, optionally in the form of a rotating control button.

5. The connection system (1) according to any one of claims 2 to 4, **characterized in that** said first blocking element (12, 12') comprises a housing (22) arranged to accommodate a cam (21), which is arranged to be actuated by said control element (5, 5') so as to impose a translational movement on said first blocking element (12,12').

6. The connection system according to any one of claims 2 to 5, **characterized in that** said first blocking element (12, 12') further comprises a pivoting element (23, 23') having a free end (30, 30') rotating around an axle (24, 24'), said pivoting element (23, 23') being arranged to perform a rotational movement during a translational movement of said first blocking element (12, 12').

7. The connection system (1) according to any one of claims 2 to 6, **characterized in that** said second blocking element (13, 13') comprises a spring (14, 14') arranged to impose a return movement on it.

8. The connection system (1) according to any one of claims 2 to 7, **characterized in that** said second blocking element (13, 13') has a free end (18, 18') provided with a caster (20, 20').

9. An inner removable closing device (7) of a connection system according to any one of claims 1 to 8, said inner removable closing device (7) comprising
a head part (9) having a central through orifice (9"), and
a tubing (9') extending from said head part (9) in the extension of said central through orifice (9"),
said head part (9) comprising, on its perimeter
a protrusion (19, 19') situated at a first level,
a ramp (29, 29') extending said protrusion (19, 19'), said ramp (29, 29') being situated at a second level lower than said first level, and
a notch (16, 16') arranged to provide access to a slot (28, 28'), said slot (28, 28') being situated at a level lower than said second level.

10. A method for connecting an inside environment of a compartment to an environment outside said compartment, said method comprising the following steps:
inserting, via a communication orifice (3) of a connecting wall (2) separating said inner environment from said outer environment, a connecting element (4) having a main body to allow it to be engaged in an inner removable closing device (7) previously positioned and blocked so as to tightly seal said communication orifice (3),
actuating a control element (5, 5') situated on the outside environment side to position it in the closing position in order to secure and block said connecting element (4) against said connecting wall (2) at said communication orifice (3) and so as to unblock said inner removable closing device (7) and allow a removal movement thereof,
setting said inner removable closing device (7) in motion to allow it to be removed from the inside of said compartment simultaneously with a removal of a case protecting said main body of said connecting element (4), said step for setting said inner removable closing device (7) in motion leading to
- blocking said control element (5, 5') in its closed position via a blocking mechanism once said inner removable closing device (7) begins a removal movement, and
- maintaining said blocking of said control element (5, 5') in the closed position via said blocking mechanism once said inner removable closing device (7) continues a removal movement, up to and including its complete removal.

11. The connection method according to claim 10, **characterized in that** said blocking of said control element (5, 5') in the closed position is done via a first blocking element (12, 12') of said blocking mechanism, one end (15, 15') of said first blocking element (12, 12') abutting against a protrusion (19, 19') of said inner removable closing device (7) having begun its removal movement.

12. The connection method according to claim 11, **characterized in that** said blocking of said control element (5, 5') in the closed position is maintained via a second blocking element (13, 13') of said blocking mechanism, said second blocking element (13, 13') blocking said first blocking element.

13. The connection method according to any one of claims 10 to 12, **characterized in that** it comprises an additional step for deactivating an additional blocking device from a first idle position to a second position, said additional blocking device being arranged to block said inner removable closing device (7) in the absence of said connecting element (4).

14. A use of a connection system (1) according to any one of claims 1 to 8, to transfer a fluid or powder.

15. A use of an inner removable closing device (7) according to claim 9, to transfer a fluid or powder.
